# EUROPÄISCHE PATENTSCHRIFT

(11) **EP 2 824 339 B1**
(45) Veröffentlichungstag und Bekanntmachung des Hinweises auf die Patenterteilung: **12.12.2018**
(21) Anmeldenummer: 14176371.4
(22) Anmeldetag: 09.07.2014
(51) Int. Cl.: F16C 17/10, F16C 33/14, F16C 9/02

(54) **Bundlagerschale und Verfahren zu ihrer Herstellung**
Flanged bearing lining and method for its production
Coussinet de palier à embase et son procédé de fabrication

(30) Priorität: 12.07.2013 DE 102013213731
(43) Veröffentlichungstag der Anmeldung: 14.01.2015
(73) Patentinhaber: KS Gleitlager GmbH, 68789 St. Leon-Rot (DE)
(72) Erfinder: Buschenhenke, Frank, 26842 Ostrhauderfehn (DE); Langner, Heinbert, 33378 Rheda-Wiedenbrück (DE); Bruns, Christian, 26871 Papenburg (DE)
(74) Vertreter: DREISS Patentanwälte PartG mbB

(56) Entgegenhaltungen:
- DE-A1- 2 528 576
- JP-A- H11 303 856
- US-A- 4 076 342
- US-A- 4 644 624
- US-A1- 2005 135 716

## Beschreibung

Die Erfindung betrifft eine Bundlagerschale, insbesondere zur Lagerung einer Kurbelwelle bei einem Kraftfahrzeugantriebsstrang, mit einem halbzylindrischen Radiallagerteil und wenigstens einem scheibenförmigen Axiallagerteil, vorzugsweise mit beidseits je einem scheibenförmigen Axiallagerteil, das aus einem einzigen Flachmaterialabschnitt in einem Biegerollprozess hergestellt ist, so dass der Radiallagerteil einstückig in den jeweiligen scheibenförmigen Axiallagerteil übergeht, wobei eine axiale Richtung, eine radiale Richtung und eine Umfangsrichtung unterscheidbar ist.

Es handelt sich also bei der gattungsgemäßen Bundlagerschale nicht um eine gebaute Bundlagerschale, bei der der Radiallagerteil und die Axiallagerteile separat hergestellt und dann miteinander verbunden werden, insbesondere durch Verklinken oder Verschweißen, sondern um eine Bundlagerschale, bei der der betreffende Axiallagerteil aus demselben Material wie der Radiallagerteil in einem Biegerollprozess gebildet wird. Es wird hierbei also der Axiallagerteil, der häufig als der Bund oder Flansch der Bundlagerschale bezeichnet wird, ausgehend von einem noch ebenen Flachmaterial durch Umbiegen oder Umlegen von Randabschnitten um 90° gebildet, so dass ein im Querschnitt U-förmiges Profil gebildet wird. Vor dem Umbiegen oder Umlegen wird vorzugsweise Material entlang des intendierten Biegeradiusbereichs spanend abgetragen, um Zugspannungen beim Umbiegen oder Umlegen zu reduzieren. Dieses U-förmige Profil wird anschließend in einem Biegerollprozess auf Halbschalenform (180°) gebracht.

Gegenüber gebauten Bundlagerschalen haben derartige gattungsgemäße einstückig gebildete Bundlagerschalen den Vorteil, dass die bei der Herstellung auftretenden Materialverluste, also Schnittabfall, gering gehalten werden können im Vergleich zur separaten Herstellung und nachträglichen Fügung der besagten Teile. Das Umlegen des Axiallagerteils kann - auch beidseitig - in einem prozessstabilen Biegerollprozess ausgeführt werden. Insgesamt sind die Herstellkosten geringer als bei gebauten Bundlagerschalen. Um das Umlegen eines Flanschabschnitts zur Bildung des Axiallagerteils bei einer 360° umfassenden Bundbuchse zu erleichtern, wird mit JP 11303856 vorgeschlagen, vor dem Umlegen des Flanschabschnitts eine durchgehende Nut in den Flachmaterialabschnitt einzufräsen oder eine Vielzahl von Trennschnitten in den Flachmaterialabschnitt einzubringen, die gleichmäßig über den Umfang verteilt sind. Dies mag das Umlegen des Flanschabschnitts erleichtern, es geht jedoch mit der ungewollten Ausbildung einer polygonalen Formgebung einher, was nachteilig ist; eine Flexibilität des Axiallagerteils lässt sich hierdurch nicht erreichen, da mehr als zwei Anbindungspunkte auf einer Kreislinie liegen.

Als Ausgangspunkt der vorliegenden Erfindung wurde festgestellt, dass aufgrund der starren Anbindung des Axiallagerteils an das Radiallagerteil sehr hohe Anforderungen an die Maßhaltigkeit der Bundlagerschale zu stellen sind, um eine optimale und bestimmungsgemäße Ebenenausrichtung des Axiallagerteils zur Anlage an den Gleitpartner erreichen zu können. Dies wiederum ist mit hohen Herstellkosten verbunden.

Der vorliegenden Erfindung liegt die Aufgabe zugrunde, eine Bundlagerschale der gattungsgemäßen Art zu schaffen, die auf wirtschaftliche Weise herstellbar ist aber dennoch keine oder zumindest geringere Probleme im Hinblick auf eine ungleichmäßige Abnutzung oder Verschleiß infolge nicht optimaler bestimmungsgemäßer Ausrichtung ihrer Abschnitte mit sich bringt.

Diese Aufgabe wird bei einer Bundlagerschafe der genannten Art erfindungsgemäße dadurch gelöst, dass der scheibenförmige Axiallagerteil nach seiner Herstellung in dem Biegerollprozess über einen Teil seiner Erstreckung in Umfangsrichtung durch einen trennenden Prozess von dem Radiallagerteil freigeschnitten ist, also ein eine Freischneidung bildender Trennschlitz vorgesehen ist, und der Axiallagerteil im nicht freigeschnittenen Teil seiner Erstreckung in Umfangsrichtung an den Radiallagerteil einstückig angebunden bleibt und dass der Axiallagerteil entweder nur in einem Scheitelbereich an den Radiallagerteil angebunden bleibt und dort ein Übergangssteg gebildet ist oder dass der Axiallagerteil an zwei beidseits des Scheitelbereichs vorgesehenen Stellen an den Radiallagerteil angebunden bleibt und an diesen zwei beidseits des Scheitelbereichs vorgesehenen Stellen jeweils ein Übergangssteg gebildet ist.

Es wird also erfindungsgemäß vorgeschlagen, den einstückig und in Umfangsrichtung durchgehend an den Radiallagerteil angebundenen Axiallagerteil in Umfangsrichtung teilweise von dem Radiallagerteil zu trennen, so dass eine Freischneidung in Form eines Trennschlitzes gebildet wird. Dies bedeutet, dass der Axiallagerteil dann nur in einem nicht freigeschnittenen Umfangsbereich in den Radiallagerteil einstückig angebunden bleibt, was zu einer Flexibilität und Nachgiebigkeit des Axiallagerteils führt. Dies bedeutet, dass der Axiallagerteil gewissermaßen federnd nachgiebig mit dem Radiallagerteil verbunden ist. Hierdurch kann sich der Axiallagerteil selbsttätig an die Einbausituation anpassen, und es kann stets eine im Wesentlichen flächenhafte gleichmäßige Anlage an den axialwirkenden Gleitpartner erfolgen. Infolge der nachgiebigen Anbindung des Axiallagerteils an den Radiallagerteil kann der Aufwand im Hinblick auf eine absolute Herstellgenauigkeit geringer gehalten werden; auch Rückbildungseffekte nach dem Umlegen des Axiallagerteils im Zuge der Herstellung wirken sich weniger dramatisch auf den späteren Betrieb des Gleitlagers aus.

Zur Realisierung der erfindungsgemäßen Bundlagerschale erweist es sich als vorteilhaft, wenn der trennende Prozess Laserschneiden oder Wasserstrahlschneiden ist. Beim Laserschneiden wird der Materialaustrag verdampft und ausgetrieben. Auch beim Wasserstrahlschneiden gestaltet sich der Spanabtrag unproblematisch.

Der Trennschlitz weist in Projektion auf die radiale Richtung, also axial betrachtet und radial gemessen, eine Breite von 0,05 - 1 mm, vorzugsweise 0,1 - 0,6 mm und weiter insbesondere 0,1 - 0,4 mm auf.

In weiterer Konkretisierung der Erfindung erweist es sich als vorteilhaft, wenn der scheibenförmige Axiallagerteil über 75 - 98 %, insbesondere 80 - 98 %, insbesondere 90 - 98 % seiner Erstreckung in Umfangsrichtung freigeschnitten ist. Auf diese Weise lässt sich eine den Anforderungen gerecht werdende nachgiebig flexible Anbindung des Axiallagerteils am Radiallagerteil erreichen.

Weiter erweist sich als vorteilhaft, wenn der scheibenförmige Axiallagerteil in radialer Richtung nahe bei dem Radiallagerteil geschnitten ist. In weiterer Ausbildung dieses Erfindungsgedankens erweist sich als vorteilhaft, wenn die Freischneidung in axialer Richtung betrachtet eine Außenseite des Radiallagerteils tangiert. Sie ist dann gewissermaßen unmittelbar im Übergang von Radiallagerteil zu Axiallagerteil angeordnet. Auf diese Weise kann eine flexible Anbindung erreicht werden.

Nach einer Variante der Erfindung bleibt der Axiallagerteil nur in einem Scheitelbereich an den Radiallagerteil angebunden, wobei dort ein Übergangssteg gebildet ist. Nach der andere Variante der Erfindung bleibt der Axiallagerteil an zwei beidseits des Scheitelbereichs vorgesehenen Stellen an den Radiallagerteil angebunden, wobei dort jeweils ein Übergangssteg gebildet ist. Dabei ist es denkbar, dass die zwei beidseits des Scheitels vorgesehenen Übergangsstege an die Trennflächen der Lagerschale angrenzen oder dass die zwei beidseits des Scheitels vorgesehenen Übergangsstege von den Trennflächen der Lagerschale beabstandet sind, also zwischen Scheitel und Trennflächen ausgebildet sind.

Es erweist sich als zweckmäßig, wenn sich ein jeweiliger Übergangssteg über ein Umfangswinkelsegment (α) erstreckt, wobei das Umfangswinkelsegment (α) wenigstens 1°, insbesondere wenigstens 2°, insbesondere wenigstens 3° und höchstens 15°, insbesondere höchstens 12°, insbesondere höchstens 10°, insbesondere höchstens 8° beträgt.

Es erweist sich auch als vorteilhaft, wenn die Freischneidung an den jeweiligen Umfangsenden des Axiallagerteils ausmündet, also zu den Trennflächen der Bundlagerschale hin.

In weiterer Ausbildung dieses Gedankens erweist sich als vorteilhaft, wenn dass die Freischneidung in einem Umfangswinkelsegment (γ) von ihrer Erstreckung in Umfangsrichtung abweicht und eine zusätzliche radiale Komponente aufweist. Hierdurch wird dann bei dem Axiallagerteil ein Hinterschnitt in Umfangsrichtung gebildet, der beim Abbrechen eines Übergangsstegs dann gleichwohl im Betrieb eine Verdrehsicherung des Axiallagerteils bewirken würde.

In weitergehender Ausbildung dieses Gedankens wird vorgeschlagen, dass das Umfangswinkelsegment (γ) 5° - 30°, insbesondere 5° - 25°, insbesondere 5° - 20°, insbesondere 5° - 15° beträgt. Es kann an die Trennflächen der Bundlagerschale angrenzen oder hierzu in Umfangsrichtung beabstandet angeordnet sein. Diese Erstreckung der Freischneidung mit einer Komponente in Umfangsrichtung und zusätzlich einer radialen Komponente kann insbesondere linear gerade erstreckt oder aber bogenförmig erstreckt ausgestaltet sein.

Weitere Merkmale, Einzelheiten und Vorteile der Erfindung ergeben sich aus den beigefügten Ansprüchen und aus der zeichnerischen Darstellung der nachfolgenden Beschreibung einer bevorzugten Ausführungsform der erfindungsgemäßen Bundlagerschale.

In der Zeichnung zeigt:
Figur 1 eine perspektivische Ansicht einer ersten Ausführungsform einer erfindungsgemäß ausgebildeten Bundlagerschale;
Figur 2 eine schematische Ansicht der Bundlagerschale nach Figur 1 in axialer Richtung gesehen;
Figur 3 eine schematische Ansicht in Richtung des Pfeils III in Figur 2 zur Verdeutlichung des trennenden Prozesses;
Figur 4 eine perspektivische Ansicht einer weiteren Ausführungsform einer erfindungsgemäß ausgebildeten Bundlagerschale;
Figur 5 eine schematische Ansicht der Bundlagerschale nach Figur 4 in axialer Richtung gesehen;
Figur 6 eine perspektivische Ansicht einer weiteren Ausführungsform einer erfindungsgemäß ausgebildeten Bundlagerschale;
Figur 7 eine schematische Ansicht der Bundlagerschale nach Figur 6 in axialer Richtung gesehen;
Figur 8 eine Ansicht einer weiteren Ausführungsform einer erfindungsgemäß ausgebildeten Bundlagerschale mit je einem Übergangssteg zwischen Scheitel und den Trennflächen.

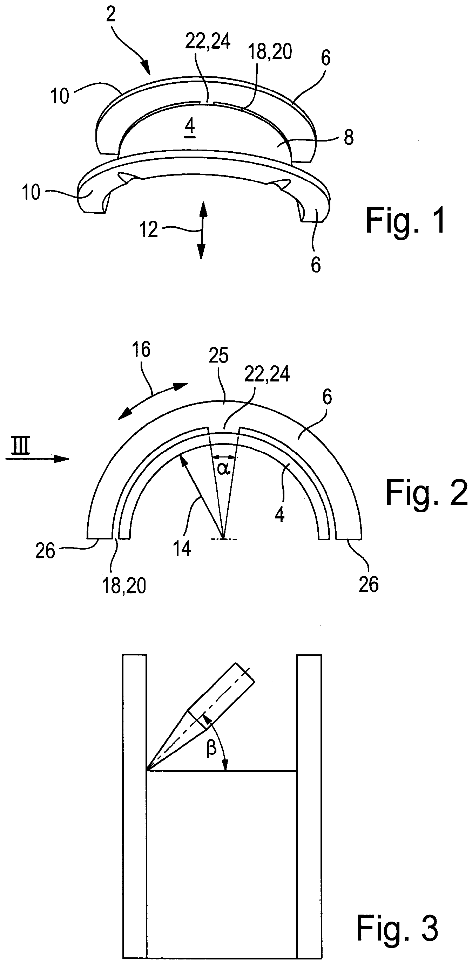

Die Figuren 1 bis 3 zeigen eine erste Ausführungsform einer erfindungsgemäßen insgesamt mit dem Bezugszeichen 2 bezeichneten Bundlagerschale. Die Bundlagerschale 2 umfasst einen halbzylindrischen Radiallagerteil 4 sowie beidseits einen scheibenförmigen Axiallagerteil 6. Die Bundlagerschale 2 ist aus einem einzigen Flachmaterialabschnitt in einem Biegerollprozess hergestellt. Dieser Flachmaterialabschnitt ist typischerweise ein Verbundwerkstoff, bestehend aus einer Stahlträgerschicht und einer metallischen Gleitschicht, typischerweise auf Aluminiumbasis oder Kupferbasis, insbesondere Bronzebasis oder Messingbasis. Nach der Ausführung des Biegerollprozesses sind die beiden Axiallagerteile 6 um 90° zur radial äußeren Fläche 8 des Radiallagerteils hin umgebogen. Sie bilden dann axiale Gleitflächen 10. In den Figuren 1 und 2 ist zudem eine axiale Richtung 12, eine radiale Richtung 14 und eine Umfangsrichtung 16 der Bundlagerschale 2 angedeutet. - Auf der Gleitschicht kann eine zusätzliche Laufschicht, insbesondere galvanisch oder in Form eines Gleitlacks, aufgebracht sein. Sie ist insbesondere auf dem Radiallagerteil und gegebenenfalls, jedoch nicht zwingend auch auf dem Axiallagerteil ausgebildet.

Erfindungsgemäß ist der Axiallagerteil 6 über einen Teil seiner Erstreckung in Umfangsrichtung 16 durch einen trennenden Prozess von dem Radiallagerteil 4 freigeschnitten. Man erkennt in Figur 1 einen eine Freischneidung 18 bildenden Trennschlitz 20. Des Weiteren erkennt man dass der Axiallagerteil 6 in einem nicht freigeschnittenen Teil 22 seiner Erstreckung in Umfangsrichtung 16 an dem Radiallagerteil 4 einstückig angebunden bleibt. In diesem nicht freigeschnittenen Teil 22 ist ein Übergangssteg 24 ausgebildet, der einen einstückigen Übergang zwischen Radiallagerteil 4 und dem jeweiligen Axiallagerteil 6 bildet.

Im beispielhaft dargestellten Fall ist der nicht freigeschnittene Teil 22, also der Übergangssteg 24, im Scheitelbereich 25 der Bundlagerschale vorgesehen. Er erstreckt sich über ein Umfangswinkelsegment α von beispielhaft 4-8°. Im beispielhaft dargestellten Fall erstreckt sich die Freischneidung 18 bzw. der Trennschlitz 20 ausgehend von dem Übergangssteg 24 in Umfangsrichtung 16 durchgehend bis zur jeweiligen Trennfläche 26 der Bundlagerschale und mündet dort aus. Auf diese Weise ist der Axiallagerteil 6 im beispielhaft dargestellten Fall nur über den Übergangssteg 24 an den Radiallagerteil 4 angebunden. Hierdurch wird eine nachgiebig flexible, elastisch federnde Anlenkung des Axiallagerteils 6 am Radiallagerteil 4 erzielt. Der jeweilige Axiallagerteil 6 kann sich somit der Einbausituation anpassen, so dass seine axialen Gleitflächen 10 flächenhaft an den Gleitpartner federnd nachgiebig anlegbar sind. Auf diese Weise kann eine optimale selbstregelnde Anpassung der Gleitpartner aneinander erzielt werden, ohne dass dies mit extremsten Anforderungen an die Fertigungsgenauigkeit verbunden wäre.

Figur 3 zeigt schließlich schematisch, wie die Freischneidung 18 bzw. der Trennschlitz 20 unter Verwendung eines Laserstrahls oder Wasserstrahls angebracht werden kann. Der Strahl wird vorzugsweise ausgehend von einem Bereich radial außerhalb des Radiallagerteils 4, also zwischen den Axiallagerteilen 6 eingestrahlt. Für die Ausrichtung des Laserstrahls oder Wasserstrahls hat sich ein Neigungswinkel β von vorzugsweise 20 bis 60°, insbesondere von 20 bis 50° zur axialen Richtung 12 als vorteilhaft erwiesen.

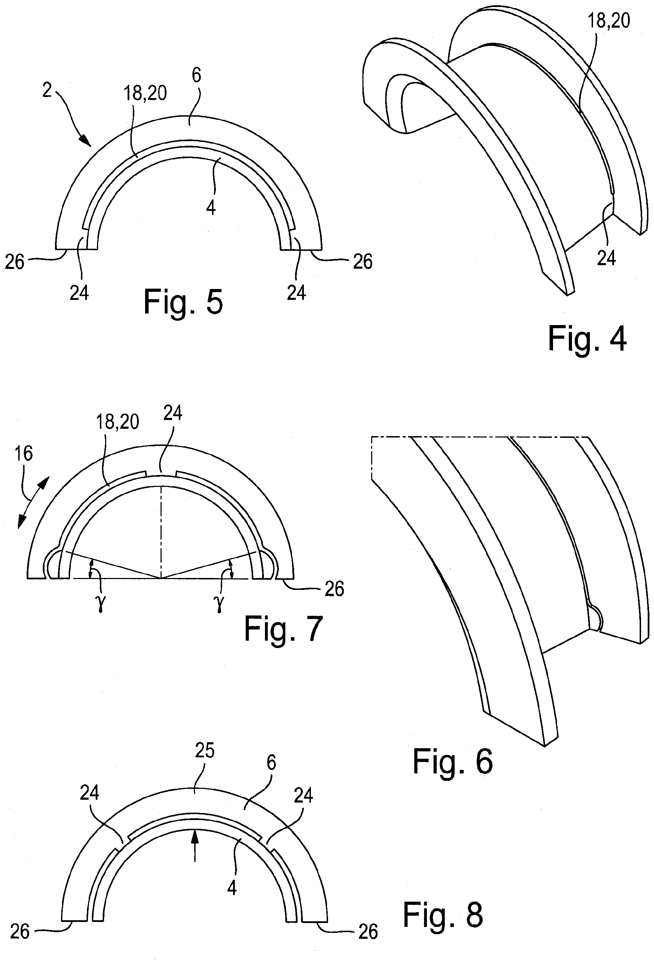

Die Figuren 4 und 5 zeigen eine weitere Ausführungsvariante mit zwei Übergangsstegen 24, die im beispielhaft dargestellten Fall angrenzend an die Trennflächen 26 der Bundlagerschale 2 ausgebildet sind. In diesem Fall erstreckt sich die Freischneidung 18 bzw. der Trennschlitz 20 von einem Übergangssteg in Umfangsrichtung 16 durch den Scheitel 25 hindurch bis zum anderen Übergangssteg 24.

Bei den Ausführungsformen gemäß Figuren 6 und 7 ist wiederum ein einziger Übergangssteg 24 im Scheitel 25 der Bundlagerschale vorgesehen, und die Freischneidung 18 bzw. der Trennschlitz 20 erstrecken sich hiervon ausgehend in Umfangsrichtung 16 bis zu den Trennflächen 26. In einem Umfangswinkelsegment γ von beispielhaft 8° bis 20° , welches hier beispielhaft an die Trennflächen 26 angrenzt, weist die Freischneidung 18 bzw. der Trennschlitz 20 eine zusätzliche radiale Komponente auf. Die Erstreckung weicht also von der Umfangsrichtung 16 ab. Im beispielhaft dargestellten Fall verläuft die Freischneidung 18 bzw. der Trennschlitz 20 in diesem Umfangswinkelsegment γ bogenförmig. Gleichwohl mündet die Freischneidung 18 bzw. der Trennschlitz bei den Trennflächen 26 aus. Insgesamt ist also wiederum eine federnde Anlenkung des jeweiligen Axiallagerteils 6 am Radiallagerteil 4 realisiert.

Schließlich zeigt Figur 8 eine weitere Ausführungsform mit zwei Übergangsstegen 24, die beidseits des Scheitels 25 jedoch von den Trennflächen 26 beabstandet vorgesehen sind. Auch hierdurch lässt sich in vorteilhafter Weise eine federnd nachgiebige Anordnung des jeweiligen Axiallagerteils 6 am Radiallagerteil 4 realisieren.

## Patentansprüche

1. Bundlagerschale (2), insbesondere zur Lagerung einer Kurbelwelle bei einem Kraftfahrzeugantriebsstrang, mit einem halbzylindrischen Radiallagerteil (4) und wenigstens einem scheibenförmigen Axiallagerteil (6), vorzugsweise mit beidseits je einem scheibenförmigen Axiallagerteil (6), die aus einem einzigen Flachmaterialabschnitt in einem Biegerollprozess hergestellt ist, so dass der Radiallagerteil (4) einstückig in den jeweiligen scheibenförmigen Axiallagerteil (6) übergeht, wobei eine axiale Richtung (12), eine radiale Richtung (14) und eine Umfangsrichtung (16) unterscheidbar ist, **dadurch gekennzeichnet, dass** der scheibenförmige Axiallagerteil (6) nach seiner Herstellung in dem Biegerollprozess über einen Teil seiner Erstreckung in Umfangsrichtung (16) durch einen trennenden Prozess von dem Radiallagerteil (4) freigeschnitten ist, also ein eine Freischneidung (18) bildender Trennschlitz (20) vorgesehen ist, und der Axiallagerteil (6) im nicht freigeschnittenen Teil (22) seiner Erstreckung in Umfangsrichtung (16) an den Radiallagerteil (4) einstückig angebunden bleibt und dass der Axiallagerteil (6) entweder nur in einem Scheitelbereich (25) an den Radiallagerteil (4) angebunden bleibt und dort ein Übergangssteg (24) gebildet ist oder dass der Axiallagerteil (6) an zwei beidseits des Scheitelbereichs (25) vorgesehenen Stellen an den Radiallagerteil (4) angebunden bleibt und an diesen zwei beidseits des Scheitelbereichs (25) vorgesehenen Stellen jeweils ein Übergangssteg (24) gebildet ist.

2. Bundlagerschale nach Anspruch 1, **dadurch gekennzeichnet, dass** der trennende Prozess Laserschneiden, Stanzen oder Wasserstrahlschneiden ist.

3. Bundlagerschale nach Anspruch 1 oder 2, **dadurch gekennzeichnet, dass** der Trennschlitz (20) in radialer Richtung (14) eine Breite von 0,05 - 1 mm, vorzugsweise 0,1 - 0,6 mm und weiter insbesondere 0,1 - 0,4 mm aufweist.

4. Bundlagerschale nach Anspruch 1, 2 oder 3, **dadurch gekennzeichnet, dass** der scheibenförmige Axiallagerteil (6) über 75 - 98 %, insbesondere 80 - 98 %, insbesondere 90 - 98 % seiner Erstreckung in Umfangsrichtung freigeschnitten ist.

5. Bundlagerschale nach einem oder mehreren der vorstehenden Ansprüche, **dadurch gekennzeichnet, dass** der scheibenförmige Axiallagerteil (6) in radialer Richtung nahe bei dem Radiallagerteil (4) geschnitten ist, insbesondere die Freischneidung (18) in axialer Richtung (12) betrachtet eine Außenseite (8) des Radiallagerteils (4) tangiert.

6. Bundlagerschale nach einem oder mehreren der vorstehenden Ansprüche, **dadurch gekennzeichnet, dass** die zwei beidseits des Scheitels (25) vorgesehenen Übergangsstege (24) an die Trennflächen (26) der Bundlagerschale angrenzen oder von den Trennflächen (26) der Bundlagerschale beabstandet sind.

7. Bundlagerschale nach einem oder mehreren der vorstehenden Ansprüche, **dadurch gekennzeichnet, dass** sich ein jeweiliger Übergangssteg (24) über ein Umfangswinkelsegment (α) erstreckt, wobei das Umfangswinkelsegment (α) wenigstens 1°, insbesondere wenigstens 2°, insbesondere wenigstens 3° und höchstens 15°, insbesondere höchstens 12°, insbesondere höchstens 10°, insbesondere höchstens 8° beträgt.

8. Bundlagerschale nach einem oder mehreren der vorstehenden Ansprüche, **dadurch gekennzeichnet, dass** die Freischneidung (18) an den Trennflächen (26) des Axiallagerteils (6) ausmündet.

9. Bundlagerschale nach einem oder mehreren der vorstehenden Ansprüche, **dadurch gekennzeichnet, dass** die Freischneidung (18) in einem Umfangswinkelsegment (γ) von ihrer Erstreckung in Umfangsrichtung (16) abweicht und eine zusätzliche radiale Komponente aufweist.

10. Bundlagerschale nach Anspruch 9, **dadurch gekennzeichnet, dass** das Umfangswinkelsegment (γ) 5° - 30°, insbesondere 5° - 25°, insbesondere 5° - 20°, insbesondere 5° - 15° beträgt.

11. Verfahren zum Herstellen einer Bundlagerschale (2) nach einem oder mehreren der vorstehenden Ansprüche aus einem einzigen Flachmaterialabschnitt, **dadurch gekennzeichnet, dass** nach dem Umlegen eines oder zweier Flanschabschnitte in einem Biegerollprozess zur Bildung des oder der Axiallagerteile (6) der scheibenförmige Axiallagerteil (6) über einen Teil seiner Erstreckung in Umfangsrichtung (16) durch einen trennenden Prozess von dem Radiallagerteil (4) freigeschnitten wird, also ein eine Freischneidung (18) bildender Trennschlitz (20) vorgesehen wird, und der Axiallagerteil (6) im nicht freigeschnittenen Teil (22) seiner Erstreckung in Umfangsrichtung (16) an den Radiallagerteil (4) einstückig angebunden bleibt.

12. Verfahren nach Anspruch 11, **dadurch gekennzeichnet, dass** der trennende Prozess durch Laserschneiden oder Wasserstrahlschneiden ausgeführt wird, und zwar insbesondere indem ein Laserstrahl oder Wasserstrahl ausgehend von einem Bereich radial außerhalb des Radiallagerteils (4) eingestrahlt wird.

## Claims

1. Flanged bearing shell (2), in particular for bearings of a crankshaft in a motor vehicle power train, having a semi-cylindrical radial bearing portion (4) and at least one disc-like axial bearing portion (6), and preferably having one disc-like axial bearing portion (6) on each of its two sides, which bearing shell is produced by a bending and rolling process from a single piece of flat material, the radial bearing portion (4) thus merging integrally into the or each disc-like axial bearing portion (6), with an axial direction (12), a radial direction (14) and a circumferential direction (16) being distinguishable, **characterised in that**, after its production by the bending and rolling process, the disc-like axial bearing portion (6) is cut free from the radial bearing portion (4) over part of its extent in the circumferential direction (16) by a parting process, i.e. a separating slot (20) is provided which forms a freeing cut (18), and, over the part (22) of its extent in the circumferential direction (16) which is not cut free, the axial bearing portion (6) remains integrally linked to the radial bearing portion (4), and either **in that** the axial bearing portion (6) remains linked to the radial bearing portion (4) only in a crest region (25) and forms a uniting bridge (24) there, or **in that** the axial bearing portion (6) remains linked to the radial bearing portion (4) at two points provided on two sides of the crest region (25) and a uniting bridge (24) is formed at each of these two points provided on two sides of the crest region (25).

2. Flanged bearing shell according to claim 1, **characterised in that** the parting process is laser cutting, stamping or punching, or water-jet cutting.

3. Flanged bearing shell according to claim 1 or 2, **characterised in that** the separating slot (20) is of a width of 0.05 - 1 mm, or preferably 0.1 - 0.6 mm, or also, in particular, 0.1 - 0.4 mm, in the radial direction (14).

4. Flanged bearing shell according to claim 1, 2 or 3, **characterised in that** the disc-like axial bearing portion (6) is cut free over 75 - 98%, and in particular 80 - 98%, and in particular 90 - 98%, of its extent in the circumferential direction.

5. Flanged bearing shell according to one or more of the preceding claims, **characterised in that** in the radial direction the disc-like axial bearing portion (6) is cut close to the radial bearing portion (4), and in particular the freeing cut (18), seen in the axial direction (12), directly follows an outer side (8) of the radial bearing portion (4).

6. Flanged bearing shell according to one or more of the preceding claims, **characterised in that** the two uniting bridges (24) provided on two sides of the crest (25) adjoin the parting-line faces (26) of the flanged bearing shell or are spaced away from the parting-line faces (26) of the flanged bearing shell.

7. Flanged bearing shell according to one or more of the preceding claims, **characterised in that** any given uniting bridge (24) extends over a circumferential sector (α), the circumferential sector (α) being at least 1°, and in particular at least 2°, and in particular at least 3° and not more than 15°, and in particular not more than 12°, and in particular not more than 10°, and in particular not more than 8°.

8. Flanged bearing shell according to one or more of the preceding claims, **characterised in that** the freeing cut (18) opens onto the parting-line faces (26) of the axial bearing portion (6).

9. Flanged bearing shell according to one or more of the preceding claims, **characterised in that** in a circumferential sector (γ) the freeing cut (18) deviates from its path in the circumferential direction (16) and has an additional radial component.

10. Flanged bearing shell according to claim 9, **characterised in that** the circumferential sector (γ) is 5° - 30°, and in particular 5° - 25°, and in particular 5° - 20°, and in particular 5° - 15°.

11. Method of producing a flanged bearing shell (2) according to one or more of the preceding claims from a single piece of flat material, **characterised in that**, after the bending over of one or two flange portions in a bending and rolling process to form the axial bearing portion or portions (6), the disc-like axial bearing portion (6) is cut free from the radial bearing portion (4) over part of its extent in the circumferential direction (16) by a parting process, i.e. a separating slot (20) is provided which forms a freeing cut (18), and the axial bearing portion (6) remains integrally linked to the radial bearing portion (4) in the part (22) of its extent in the circumferential direction (16) which is not cut free.

12. Method according to claim 11, **characterised in that** the parting process is performed by laser cutting or water-jet cutting, i.e. in particular by beaming in or injecting a laser beam or a water jet from a region radially outside the radial bearing portion (4).

## Revendications

1. Coussinet de palier composé (2), destiné en particulier à supporter un vilebrequin dans une transmission de véhicule automobile, avec une partie de palier radiale semi-cylindrique (4) et au moins une partie de palier axiale en forme de disque (6), de préférence avec une partie de palier axiale en forme de disque (6) des deux côtés, qui est fabriqué à partir d'un seul tronçon de matériau plat dans un processus à rouleaux de cintrage, de sorte que la partie de palier radiale (4) se fond d'un seul tenant avec la partie de palier axiale en forme de disque (6) respective, dans lequel une direction axiale (12), une direction radiale (14) et une direction circonférentielle (16) peuvent être distinguées, **caractérisé en ce que** la partie de palier axiale en forme de disque (6) est découpée après sa fabrication durant le processus à rouleau de cintrage sur une partie de son étendue dans la direction circonférentielle (16) par un processus de séparation de la partie de palier radiale (4), également **en ce qu'**une fente de séparation (20) formant une découpe (18) est prévue, et la partie de palier axiale (6), dans la partie non découpée (22) de son étendue dans la direction circonférentielle (16), reste reliée d'un seul tenant à la partie de palier radiale (4), et **en ce que** la partie de palier axiale (6), en variante uniquement dans une zone de sommet (25), reste reliée à la partie de palier radiale (4) et une traverse (24) est formée, ou **en ce que** la partie de palier axiale (6) reste reliée à la partie de palier radiale (4) au niveau de deux positions prévues des deux côtés de la zone de sommet (25), et une traverse (24) est formée respectivement au niveau de ces deux positions prévues des deux côtés de la zone de sommet (25).

2. Coussinet de palier composé selon la revendication 1, **caractérisé en ce que** le procédé de séparation est une découpe au laser, un poinçonnage ou une découpe par jet d'eau.

3. Coussinet de palier composé selon la revendication 1 ou 2, **caractérisé en ce que en ce que** la fente de séparation (20), dans une direction radiale (14), a une largeur de 0,05 à 1 mm, de préférence de 0,1 à 0,6 mm, et plus particulièrement de 0,1 à 0,4 mm.

4. Coussinet de palier composé selon la revendication 1, 2 ou 3, **caractérisé en ce que** la partie de palier axiale en forme de disque (6) est découpée dans la direction circonférentielle sur 75 à 98 %, en particulier 80 à 98 %, en particulier 90 à 98 % de son étendue.

5. Coussinet de palier composé selon une ou plusieurs des revendications précédentes, **caractérisé en ce que** la partie de palier axiale en forme de disque (6) est découpée dans la direction radiale à proximité de la partie de palier radiale (4), en particulier la découpe (18) est tangente à un côté extérieur (8) de la partie de palier radiale (4) considéré dans la direction axiale (12).

6. Coussinet de palier composé selon une ou plusieurs des revendications précédentes, **caractérisé en ce que** les deux traverses (24) prévues des deux côtés du sommet (25) sont adjacentes aux surfaces de séparation (26) du coussinet de palier composé ou sont espacées des surfaces de séparation (26) du coussinet de palier composé.

7. Coussinet de palier composé selon une ou plusieurs des revendications précédentes, **caractérisé en ce qu'**une traverse respective (24) s'étend sur un segment angulaire circonférentiel (α), dans lequel le segment angulaire circonférentiel (α) est d'au moins 1°, en particulier d'au moins 2°, en particulier d'au moins 3° et d'au plus 15°, en particulier d'au plus 12°, en particulier d'au plus 10°, en particulier d'au plus 8°.

8. Coussinet de palier composé selon une ou plusieurs des revendications précédentes, **caractérisé en ce que** la découpe (18) débouche au niveau des surfaces de séparation (26) de la partie de palier axiale (6).

9. Coussinet de palier composé selon une ou plusieurs des revendications précédentes, **caractérisé en ce que** la découpe (18) dévie dans un segment angulaire circonférentiel (γ) de son étendue dans la direction circonférentielle (16) et présente une composante radiale supplémentaire.

10. Cuvette de palier selon la revendication 9, **caractérisé en ce que** le segment angulaire circonférentiel (γ) est compris entre 5° et 30°, en particulier entre 5° et 25°, en particulier entre 5 et 20°, et en particulier entre 5 et 15°.

11. Procédé de fabrication d'un coussinet de palier composé (2) selon une ou plusieurs des revendications précédentes à partir d'un tronçon de matériau plat unique, **caractérisé en ce que**, après le cintrage d'un ou de deux tronçon de rebord dans un processus à rouleaux de cintrage pour former la ou les parties de palier axiales (6), la partie de palier axiale en forme de disque (6) est libérée de la partie de palier radiale (4) par découpe sur une partie de son étendue dans la direction circonférentielle (16), par un processus de séparation, et **en ce qu'**une fente de séparation (20) formant une découpe (18) est prévue, et la partie de palier de axiale (6), dans la partie de non découpée (22) de son étendue dans la direction circonférentielle (16), reste reliée d'un seul tenant à la partie de palier radiale (4).

12. Procédé selon la revendication 11, **caractérisé en ce que en ce que** le processus de séparation est réalisé par découpe au laser ou par jet d'eau, en particulier par exposition à un faisceau laser ou un jet d'eau provenant d'une zone située radialement à l'extérieur de la partie de palier radiale (4).
